# EUROPÄISCHE PATENTSCHRIFT

(11) **EP 2 546 620 B1**
(45) Veröffentlichungstag und Bekanntmachung des Hinweises auf die Patenterteilung: **09.04.2014**
(21) Anmeldenummer: 11173802.7
(22) Anmeldetag: 13.07.2011
(51) Int. Cl.: G01J 1/18, G01J 1/42, G01J 1/46

(54) **Vorrichtung zur Umgebungslichtkompensation für gleichermaßen Nutzlicht und Umgebungslicht ausgesetzten optischen Sensoren**
Ambient light compensation device for optical sensors equally exposed to useful light and ambient light
Dispositif de compensation de la lumière ambiante pour une lumière utile uniforme et capteurs optiques soumis à la lumière ambiante

(43) Veröffentlichungstag der Anmeldung: 16.01.2013
(73) Patentinhaber: ELMOS Semiconductor AG, 44227 Dortmund (DE)
(72) Erfinder: Budde, Dr. Wolfram, 44227 Dortmund (DE); Büsser, Wolfgang, 44227 Dortmund (DE)
(74) Vertreter: von Kreisler Selting Werner

(56) Entgegenhaltungen:
- WO-A1-2004/027357
- DE-A1- 10 125 307

## Beschreibung

Die Erfindung betrifft eine Vorrichtung zur Umgebungslichtkompensation für gleichermaßen Nutzlicht und Umgebungslicht ausgesetzten optischen Sensoren, wie z. B. aus DE-A-101 25 307 und WO-A-2004/027357 bekannt.

Für optische Sensoren, die mit moduliertem oder gepulstem Nutzlicht arbeiten, ist eine möglichst gute Kompensation des (als kontinuierliches Licht angenommenen) Umgebungslichts eine der Kernfunktionen der Applikation. Für Zeilen- und Flächenanordnungen der Sensoren ist die geeignete Implementierung der Kompensationsschaltung auf Grund der beschränkten Fläche eine besondere Herausforderung.

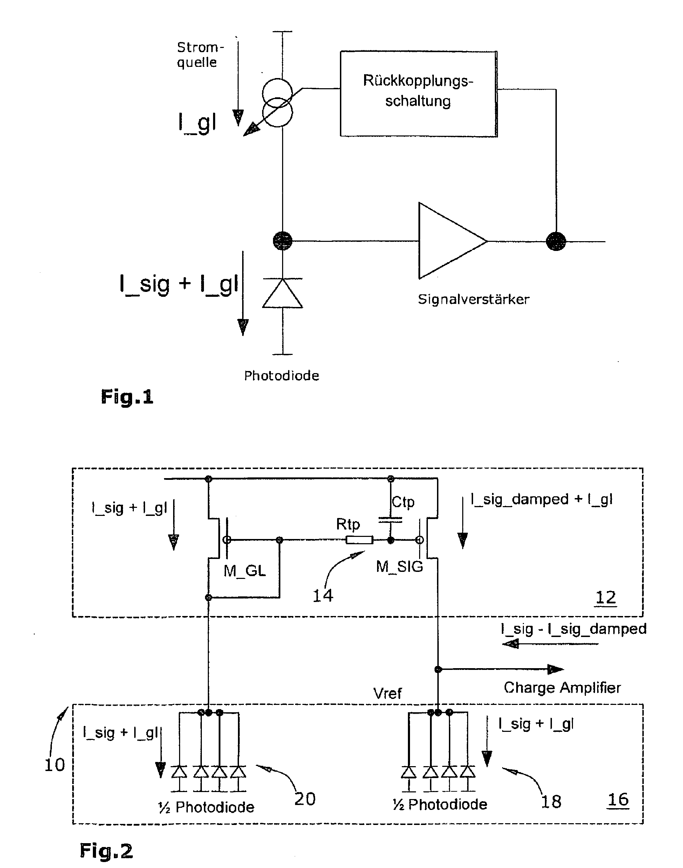

Bisher vielfach eingesetzte bekannte Verfahren arbeiten nach dem in Fig. 1 gezeigten Prinzip.

Der Strom der Fotodiode, der sich aus einem Signallichtanteil I_sig und einem Umgebungslichtanteil I_gl zusammensetzt, wird verstärkt und durch eine geeignete Filter- und Kompensationsschaltung auf eine Stromquelle (oder einen Widerstand geführt, so dass nur das Signallicht (I_sig) übrigbleibt und das Umgebungslicht (I_gl) unterdrückt wird. Damit kann das Umgebungslicht auch Wechselkomponenten (z.B. von Leuchtstofflampen) enthalten, die auch mit geeigneten Filtern beseitigt werden.

Der Nachteil dieses Konzepts ist, dass die Umgebungslichtkompensation hinter dem Signalverstärker ansetzt, und damit Signalverstärker und Umgebungslichtkompensation nicht mehr unabhängig voneinander dimensioniert werden können. Das im Folgenden dargestellte erfindungsgemäße Verfahren beseitigt diesen Nachteil.

Dementsprechend wird mit der Erfindung eine Vorrichtung zur Umgebungslichtkompensation für gleichermaßen gepulstem bzw. moduliertem Nutzlicht und Umgebungslicht ausgesetzten optischen Sensoren vorgeschlagen, wobei die Vorrichtung versehen ist mit
- mindestens einer ersten Fotodiode,
- mindestens einer zweiten Fotodiode,
- wobei die mindestens eine erste Fotodiode im Wesentlichen dem gleichen Nutz- und Umgebungslicht wie die mindestens eine zweite Fotodiode aussetzbar ist, und
- einer Stromspiegelschaltung mit einem Eingang und einem Ausgang, wobei die mindestens eine erste Fotodiode mit dem Eingang der Stromspiegelschaltung verbunden ist und diesen mit einem Fotostrom speist und wobei die mindestens eine zweite Fotodiode mit dem Ausgang der Stromspiegelschaltung verbunden ist und von dieser mit Strom gespeist wird,
- wobei die Stromspiegelschaltung ein zwischen ihrem Eingang und ihrem Ausgang geschaltetes Tiefpass-Filter aufweist und
- wobei am Ausgang der Stromspiegelschaltung ein Ausgangssignal ansteht, das das umgebungslichtkompensierte Nutzsignal repräsentiert.

Nach der Erfindung ist vorgesehen, jedes Bildelement eines von einem optischen Sensor erfassten "Bilds" durch mindestens zwei Fotodioden zu repräsentieren. Damit wird in vorteilhafter Weise sichergestellt, dass sowohl die erste als auch die zweite Fotodiode gleichzeitig dem gleichen Nutzlicht und dem gleichen Umgebungslicht ausgesetzt ist. Mit Hilfe einer Stromspiegelschaltung, die zwischen diese beiden Fotodioden bzw. die zwischen die beiden Gruppen von ersten und zweiten Fotodioden geschaltet ist, wird der Fotostrom der ersten Fotodiode gespiegelt und dieser gespiegelte Strom der zweiten Fotodiode zugeführt. Dabei erfolgt in der Stromspiegelschaltung eine Umgebungslichtunterdrückung bzw. -dämpfung, was mit Hilfe eines Tiefpass-Filters realisiert wird. Das Tiefpass-Filter lässt das das Nutzlicht repräsentierende Signal der ersten Fotodiode gedämpft durch, unterdrückt aber mit guter Qualität und in ausreichendem Maße das auf das Umgebungslicht zurückzuführende Signal der ersten Fotodiode. Am Ausgang wird also das gedämpfte gespiegelte Stromsignal mit dem Stromsignal der zweiten Fotodiode kombiniert, und zwar in Form einer Subtraktion, so dass letztendlich das das Nutzlicht repräsentierende Stromsignal der zweiten Fotodiode übrigbleibt. Dieser Signalanteil wird dann beispielsweise in einem Signalverstärker verstärkt und applikationsabhängig weiterverarbeitet.

In vorteilhafter Weiterbildung der Erfindung ist vorgesehen, dass dem Ausgang der Stromspiegelschaltung zwischen diesem und der mindestens einen zweiten Fotodiode ein Integrator nachgeschaltet ist, wobei der Integrator ein das umgebungslichtkompensierte Nutzsignal repräsentierendes Ausgangssignal liefert.

Zweckmäßig ist es, wenn der Integrator mit einem Schalter versehen ist, der vor der Erfassung von Nutzlicht seitens der ersten und zweiten Fotodioden geöffnet und nach einer Erfassung von Nutzlicht wieder geschlossen wird.

In weiterer vorteilhafter Weiterbildung der Erfindung ist vorgesehen, dass das Tiefpass-Filter der Stromspiegelschaltung zwischen dem Gate-Anschluss eines ersten Transistors am Eingang der Stromspiegelschaltung und dem Gate-Anschluss eines zweiten Transistors am Ausgang der Stromspiegelschaltung geschaltet ist.

Zweckmäßig ist es ferner, wenn der steuerbare Leitungspfad des ersten Transistors in Reihe mit der mindestens einen ersten Fotodiode und der steuerbare Leitungspfad des zweiten Transistors in Reihe mit der mindestens einen zweiten Fotodiode geschaltet ist.

Gemäß einer vorteilhaften Weiterbildung der Erfindung ist vorgesehen, dass mehrere jeweils parallel zueinander geschaltete erste Fotodioden und mehrere ebenfalls parallel geschaltete zweite Fotodioden vorhanden sind und dass die ersten und zweiten Fotodioden wechselweise nebeneinander angeordnet sind.

Gemäß einer weiteren vorteilhaften Weiterbildung der Erfindung ist vorgesehen, dass die Anzahl der ersten Fotodioden in einem vorgebbaren Verhältnis zur Anzahl der zweiten Fotodioden steht und dass die Stromspiegelschaltung ein sich aus diesem Verhältnis ergebendes Kompensationsverhältnis aus dem Strom an ihrem Eingang zum Strom an ihrem Ausgang bildet.

Die Erfindung wird nachfolgend anhand zweier Ausführungsbeispiele sowie unter Bezugnahme auf die Zeichnung näher erläutert. Im Einzelnen zeigen dabei:
- Fig. 1: ein Schaltbild zur Darstellung eines bekannten Verfahrens zur Umgebungslichtkompensation bei optischen Sensoren,
- Fig. 2: ein Schaltbild einer erfindungsgemäßen Umgebungslichtkompensation mit Stromspiegelschaltung,
- Fig. 3: den typischen Verlauf des Nutzsignals, des gedämpften Nutzsignals und der Differenz zwischen beiden,
- Fig. 4: ein Ausführungsbeispiel für eine Umgebungslichtkompensation mit Stromspiegelschaltung und nachgeschaltetem Integrator und
- Fig. 5: den zeitlichen Verlauf des Öffnens und Schließens eines Schalters des Integrators in Relation zum Nutzlicht.

Die wesentliche Idee der Erfindung besteht darin, den optischen Sensor aufzuteilen (z.B. 1:1, es sind aber auch andere Teilungsverhältnisse denkbar, bei ungleichen Teilungsverhältnissen sollte die Stromspiegelspiegelschaltung (M_GL, M_SIG) entsprechend dem Teilungsverhältnis gewichtet werden), und mit Hilfe der nun vorhandenen mindestens zwei Dioden, die im Idealfall beide den gleichen Lichtverhältnissen ausgesetzt sind, die Umgebungslichtkompensation zu realisieren. Damit einher geht leider eine verringerte Amplitude des Nutzsignals, was aber zu Gunsten einer guten Umgebungslichtkompensation in Kauf genommen wird. Fig. 2 zeigt die grundsätzliche Schaltung.

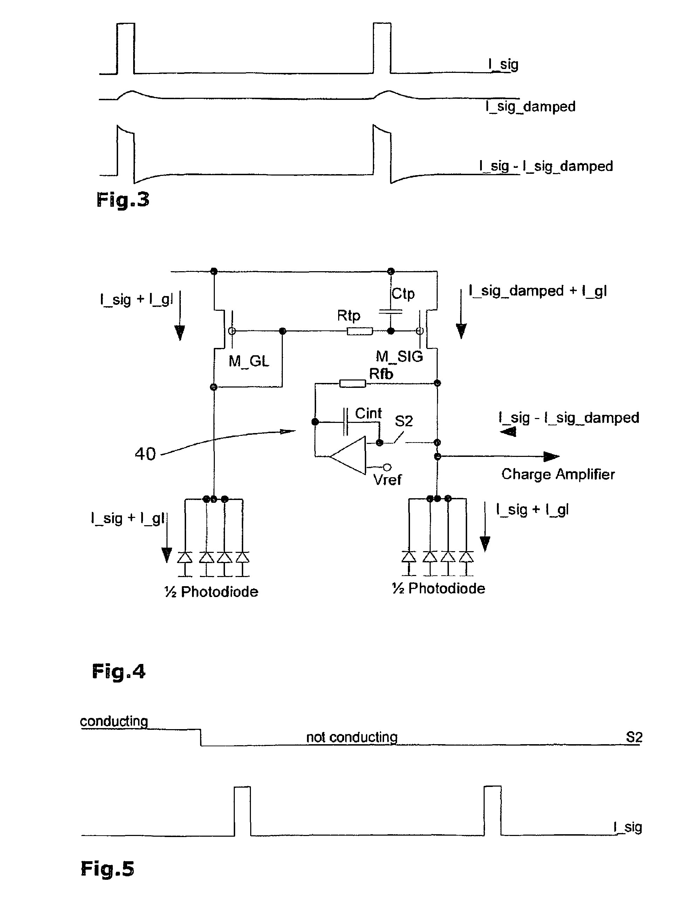

Fig. 3 zeigt einen typischen Verlauf des getakteten Nutzsignals I_sig, des gedämpften Nutzsignals I_sig_damped, und deren Differenz.

Die Basis der Schaltung 10 gemäß Fig. 2 ist eine Stromspiegelschaltung 12 mit einem Tiefpass-Filter (Rtp, Ctp) 14. Durch das Tiefpass-Filter 14 folgt der Spiegel nur bis zu seiner Grenzfrequenz dem Umgebungslicht. Das Signallicht (oberhalb der Grenzfrequenz) wird zwar ein wenig gedämpft, wichtiger ist aber die gute Unterdrückung des Umgebungslichts. Der optische Sensor 16 ist in Fig. 2 aus mehreren Segmenten in Form von parallelgeschalteten ersten Fotodioden 18 und parallelgeschalteten zweiten Fotodioden 20 bestehend gezeichnet. Eine Segmentierung und Verschachtelung der Segmente empfiehlt sich, damit die Signaldioden bzw, ersten Fotodioden 18 (rechts in Fig. 2) und die Kompensationsdioden bzw. zweiten Fotodioden 20 (links in Fig. 2) den gleichen Lichtverhältnissen ausgesetzt sind.

Anstelle einer 1:1-Aufteilung der Fotodiode kann man natürlich auch andere Aufteilungen verwenden (z.B. 1:2, 1:3, ...) und das Verhältnis der Fotoströme dann über das W/L-Verhältnis der Transistoren M_GL 22 (am Eingang 24) und M_SIG 26 (am Ausgang 28) der Stromspiegelschaltung 12 kompensieren.

Eine weitere Verbesserung der Umgebungslichtkompensation lässt sich mit einem zusätzlichen Integrator 30 erzielen, wie es Fig. 4 zeigt.

Der Integrator 30 dient dazu, den Restfehler der Stromspiegelschaltung (durch schlechtes Matching oder ungleiche Lichtverhältnisse) auszugleichen. Weiterhin wird damit der Ausgang (zum Charge-Amplifier) des Pixels (setzt sich zusammen aus mindestens einer ersten und mindestens einer zweiten Fotodiode 18,20) auf die Spannung Vref eingeregelt, was das Einschwingen des Verstärkers begünstigt. Zu Beginn der Messphase wird der Schalter S2 des Integrators 30 geöffnet. Der Integrator 30 speichert den letzten Wert und beeinflusst die Messung nicht weiter. Fig. 5 zeigt den zeitlichen Verlauf der Ansteuerung des Schalters S2 in Relation zu den Nutzlichtpulsen.

Vorteil dieser Schaltung ist, dass auch noch während der Messphase das Umgebungslicht nachgeregelt wird, in gewisser Weise nachteilig ist die damit einhergehende Dämpfung des Signals. Ein vollständiges Sampling des Umgebungslichts könnte den Nachteil der Signaldämpfung beseitigen.

## Patentansprüche

1. Vorrichtung zur Umgebungslichtkompensation für gleichermaßen Nutzlicht und Umgebungslicht ausgesetzten optischen Sensoren, mit
- mindestens einer ersten Fotodiode (18),
- mindestens einer zweiten Fotodiode (20),
- wobei die mindestens eine erste Fotodiode (18) im Wesentlichen dem gleichen Nutz- und Umgebungslicht wie die mindestens eine zweite Fotodiode (20) aussetzbar ist, und
- einer Stromspiegelschaltung (12) mit einem Eingang (24) und einem Ausgang (28), wobei die mindestens eine erste Fotodiode (18) mit dem Eingang (24) der Stromspiegelschaltung (12) und die mindestens eine zweite Fotodiode (20) mit dem Ausgang (28) der Stromspiegelschaltung (12) verbunden ist, so dass der Fotostrom der ersten Fotodiode gespiegelt, und dieser gespiegelte Strom der zweiten Fotodiode zugeführt wird,
- wobei die Stromspiegelschaltung (12) ein zwischen ihrem Eingang (24) und ihrem Ausgang (28) geschaltetes Tiefpass-Filter (14) zur Dämpfung bzw. Unterdrückung des Umgebungslicht - Anteils aufweist und
- wobei am Ausgang (28) der Stromspiegelschaltung (12) ein Ausgangssignal ansteht, das das umgebungslichtkompensierte Nutzsignal repräsentiert und dieses in Form einer Subtraktion mit dem Signal der zweiten Fotodiode kombiniert wird.

2. Vorrichtung nach Anspruch 1, **dadurch gekennzeichnet, dass** dem Ausgang (28) der Stromspiegelschaltung (12) zwischen diesem und der mindestens einen zweiten Fotodiode (20) ein Integrator (30) nachgeschaltet ist, wobei der Integrator (20) ein das umgebungslichtkompensierte Nutzsignal repräsentierendes Ausgangssignal liefert.

3. Vorrichtung nach Anspruch 2, **dadurch gekennzeichnet, dass** der Integrator (30) mit einem Schalter (S2) versehen ist, der vor der Erfassung von Nutzlicht seitens der ersten und zweiten Fotodioden (18,20) geöffnet und nach einer Erfassung von Nutzlicht wieder geschlossen wird.

4. Vorrichtung nach einem der Ansprüche 1 bis 3, **dadurch gekennzeichnet, dass** das Tiefpass-Filter (14) der Stromspiegelschaltung (12) zwischen dem Gate-Anschluss eines ersten Transistors (22) am Eingang (24) der Stromspiegelschaltung (12) und dem Gate-Anschluss eines zweiten Transistors (26) am Ausgang (28) der Stromspiegelschaltung (12) geschaltet ist.

5. Vorrichtung nach Anspruch 4, **dadurch gekennzeichnet, dass** der steuerbare Leitungspfad des ersten Transistors (22) in Reihe mit der mindestens einen ersten Fotodiode (18) und der steuerbare Leitungspfad des zweiten Transistors (26) in Reihe mit der mindestens einen zweiten Fotodiode (20) geschaltet ist.

6. Vorrichtung nach einem der Ansprüche 1 bis 5, **dadurch gekennzeichnet, dass** mehrere jeweils parallel zueinander geschaltete erste Fotodioden (18) und mehrere ebenfalls parallel geschaltete zweite Fotodioden (20) vorhanden sind und dass die ersten und zweiten Fotodioden (18,20) wechselweise nebeneinander angeordnet sind.

7. Vorrichtung nach einem der Ansprüche 1 bis 6, **dadurch gekennzeichnet, dass** die Anzahl der ersten Fotodioden (18) in einem vorgebbaren Verhältnis zur Anzahl der zweiten Fotodioden (20) steht und dass die Stromspiegelschaltung (12) ein sich aus diesem Verhältnis ergebendes Kompensationsverhältnis aus dem Strom an ihrem Eingang zum Strom an ihrem Ausgang bildet.

## Claims

1. A device for ambient light compensation for use in optical sensors exposed to both useful light and ambient light, said device comprising
- at least one first photodiode (18),
- at least one second photodiode (20),
- said at least one first photodiode (18) being adapted to be exposed to substantially the same useful light and ambient light as said at least one second photodiode (20), and
- a current mirror circuit (12) having an input (24) and an output (28), said at least one first photodiode (18) being connected to the input (24) of the current mirror circuit (12), and said at least one second photodiode (20) being connected to the output (28) of the current mirror circuit (12), so that the photocurrent of the first photodiode is mirrored and this mirrored current is supplied to the second photodiode,
- the current mirror circuit (12) comprising a lowpass filter (14) connected between the input (24) and the output (28) of the current mirror circuit, said lowpass filter provided for the damping and respectively suppressing of the ambient light portion, and
- the output (28) of the current mirror circuit (12) providing an output signal representing the useful signal compensated for ambient light, said output signal being combined, in form of a subtraction, with the signal of the second photodiode.

2. The device of claim 1, **characterized in that** an integrator (30) is connected downstream of the output (28) of the current mirror circuit (12) between said output and said at least one second photodiode (20), said integrator (30) being operative to supply an output signal representing the useful signal compensated for ambient light.

3. The device of claim 2, **characterized in that** said integrator (30) is provided with a switch (S2) which will be opened prior to the capturing of useful light performed by the first and second photodiodes (18,20) and will be closed again after the capturing of useful light.

4. The device of any one of claims 1 to 3, **characterized in that** the lowpass filter (14) of the current mirror circuit (12) is connected between the gate terminal of a first transistor (22) at the input (24) of the current mirror circuit (12) and the gate terminal of a second transistor (26) at the output (28) of the current mirror circuit (12).

5. The device of claim 4, **characterized in that** the controllable conductive path of the first transistor (22) is connected in series with said at least one first photodiode (18) and that the controllable conductive path of the second transistor (26) is connected in series with said at least one second photodiode (20).

6. The device of any one of claims 1 to 5, **characterized in that** a plurality of respectively parallel-connected first photodiodes (18) and a plurality of likewise respectively parallel-connected second photodiodes (20) are provided and that said first and second photodiodes (18,20) are arranged alternately adjacent to each other.

7. The device of any one of claims 1 to 6, **characterized in that** the number of the first photodiodes (18) is in a presettable ratio to the number of the second photodiodes (20) and that the current mirror circuit (12) generates, resulting from this ratio, a compensation ratio from the current at its input relative to the current at its output.

## Revendications

1. Dispositif de compensation de lumière ambiante pour des capteurs optiques exposés de manière égale à la lumière utile et à la lumière ambiante, comprenant
- au moins une première photodiode (18),
- au moins une seconde photodiode (20),
- ladite première photodiode (18), au moins au nombre de une, pouvant être exposée sensiblement à la même lumière utile et ambiante que ladite seconde photodiode (20), au moins au nombre de une, et
- un circuit miroir de courant (12) pourvu d'une entrée (24) et d'une sortie (28), ladite première photodiode (18), au moins au nombre de une, étant reliée à l'entrée (24) du circuit miroir de courant (12) et ladite seconde photodiode (20), au moins au nombre de une, étant reliée à la sortie (28) du circuit miroir de courant (12), de sorte que le courant photoélectrique de la première photodiode est réfléchi et que ce courant réfléchi est amené à la seconde photodiode,
- le circuit miroir de courant (12) présentant un filtre passe-bas (14) monté entre son entrée (24) et sa sortie (28) pour atténuer ou supprimer la composante de lumière ambiante, et
- un signal de sortie étant présent à la sortie (28) du circuit miroir de courant (12), lequel représente le signal utile après compensation de lumière ambiante et celui-ci étant combiné au signal de la seconde photodiode sous la forme d'une soustraction.

2. Dispositif selon la revendication 1, **caractérisé en ce qu'**un intégrateur (30) est monté en aval de la sortie (28) du circuit miroir de courant (12) entre celle-ci et ladite seconde photodiode (20), au moins au nombre de une, l'intégrateur (30) fournissant un signal de sortie représentant le signal utile après compensation de lumière ambiante.

3. Dispositif selon la revendication 2, **caractérisé en ce que** l'intégrateur (30) est doté d'un commutateur (S2) qui s'ouvre avant la détection de lumière utile par les première et seconde photodiodes (18, 20) et se referme après une détection de lumière utile.

4. Dispositif selon l'une des revendications 1 à 3, **caractérisé en ce que** le filtre passe-bas (14) du circuit miroir de courant (12) est monté entre la borne de grille d'un premier transistor (22) à l'entrée (24) du circuit miroir de courant (12) et la borne de grille d'un second transistor (26) à la sortie (28) du circuit miroir de courant (12).

5. Dispositif selon la revendication 4, **caractérisé en ce que** le chemin de conduction commandable du premier transistor (22) est monté en série avec ladite première photodiode (18), au moins au nombre de une, et le chemin de conduction commandable du second transistor (26) est monté en série avec ladite seconde photodiode (20), au moins au nombre de une.

6. Dispositif selon l'une des revendications 1 à 5, **caractérisé par** la présence de plusieurs premières photodiodes (18) respectivement montées en parallèle entre elles et de plusieurs secondes photodiodes (20) également montées en parallèle entre elles et en ce que les premières et secondes photodiodes (18, 20) sont disposées côte à côte en alternance.

7. Dispositif selon l'une des revendications 1 à 6, **caractérisé en ce que** le nombre de premières photodiodes (18) est proportionnel, de manière prédéterminable, au nombre de secondes photodiodes (20) et **en ce que** le circuit miroir de courant (12) génère un rapport de compensation découlant de cette relation entre le courant à son entrée et le courant à sa sortie.
